# EUROPEAN PATENT SPECIFICATION

(11) **EP 4 254 711 B1**
(45) Date of publication and mention of the grant of the patent: **28.10.2026**
(21) Application number: 22165531.9
(22) Date of filing: 30.03.2022
(51) Int. Cl.: H02J 3/38, H02M 1/00, H02M 7/5395, H02M 7/493

(54) **A METHOD AND A CONTROL SYSTEM FOR CONTROLLING PARALLEL CONNECTED POWER CONVERTERS**
VERFAHREN UND STEUERSYSTEM ZUR STEUERUNG VON PARALLEL GESCHALTETEN LEISTUNGSWANDLERN
PROCÉDÉ ET SYSTÈME DE COMMANDE POUR COMMANDER DES CONVERTISSEURS DE PUISSANCE RACCORDÉS EN PARALLÈLE

(43) Date of publication of application: 04.10.2023
(73) Proprietor: Danfoss A/S, 6430 Nordborg (DK)
(72) Inventor: SUMMANEN, Antti, 53600 LAPPEENRANTA (FI); TARKIAINEN, Antti, 53600 LAPPEENRANTA (FI)
(74) Representative: Väänänen, Janne Kalervo

(56) References cited:
- WO-A1-2018/150681
- US-A1- 2012 243 274
- US-A1- 2021 265 906

## Description

### Field of the disclosure

The disclosure relates generally to control of power converters which constitute a part of an alternating current "AC" system e.g. a microgrid. More particularly, the disclosure relates to a control system and to a method for controlling power converters whose alternating voltage terminals are connected to each other. Furthermore, the disclosure relates to a power converter. Furthermore, the disclosure relates to a computer program for controlling power converters whose alternating voltage terminals are connected to each other.

### Background

In many cases, an alternating current "AC" system, such as a microgrid, is supplied with power converters whose alternating voltage terminals are connected to each other. Each of the power converters can be fed with for example a direct current "DC" energy source through an intermediate direct voltage link of the power converter. The DC energy source may comprise for example a battery, a fuel cell, and/or a genset comprising a rectifier and a generator driven by a combustion engine, a wind turbine, a hydro turbine, or some other prime mover. Each of the power converters is configured to convert the direct voltage of its direct voltage link into one or more alternating voltages e.g. into three-phase alternating voltage.

One of the reasons for paralleling power converters in the above-described way is a desire to have redundancy so that in a failure situation where one of the power converters becomes inoperable the remaining power converters can continue feeding an AC load but with reduced total power. The paralleling also makes it possible to use smaller power converters and smaller energy sources to provide the power needed by the AC load.

The parallel connected power converters create an AC voltage grid, and they must maintain frequency and voltage of the AC voltage grid at their setpoints with a sufficient accuracy. The typical setpoints are for example 400 V root-mean-square "RMS" line-to-line voltage and 50 Hz frequency. The AC load connected to the AC voltage grid draws active power and reactive power from the AC voltage grid. To allow advantageous paralleling of several power converters, the power converters should balance their loads equally or in another desired way between the power converters. In many cases, the need for balancing relates not only to active power but to reactive power, too.

A traditional solution for power balancing between parallel connected power converters is to use frequency drooping in which a frequency reference of each power converter is changed by a frequency droop value of the power converter, where the frequency droop value is dependent on electric power supplied by the power converter and decreases the frequency reference when a power flow direction is outwards from alternating voltage terminals of the power converter. As the power sharing between the power converters is dependent on differences between the frequency references of the power converters rather than on absolute values of the frequency references, there is a risk that the frequency of the AC voltage grid created by the parallel connected power converters drifts too far from a desired nominal frequency e.g. 50 Hz.

In another traditional solution for power balancing between parallel connected power converters, one of the power converters acts as a master which determines the AC voltage frequency of the system whereas the other power converters act as slaves which control their frequency references so that desired power sharing is achieved. A failure in the master would render the whole system inoperable, or the system should have a mechanism for dynamically changing the master on fly in a reliable way. The mechanism for dynamically changing the master may, in turn, involve its own technical challenges.

Publication US2012243274 describes a method for controlling power converters connected in parallel between an ac arrangement and a common dc link. Each of the power converters operates in accordance with the pulse width modulation "PWM" strategy and has an independently variable dc link reference voltage, even if the power converters have a common dc link voltage. The method comprises modifying an output direct voltage droop characteristic of at least one of the parallel-connected power converters by varying the direct voltage link reference voltage of the at least one power converter based on the output direct current of the at least one power converter and the average of the output direct currents of the power converters.

### Summary

In accordance with the invention, there is provided a new control system for controlling power converters whose alternating voltage terminals are connected to each other. The power converters may constitute for example an alternating current "AC" microgrid.

A control system according to the invention comprises a data processing system configured to:
- form, for each of the power converters, a frequency droop value based on data indicative of electric power of the power converter,
- change a frequency reference of each of the power converters by the frequency droop value of the power converter, the frequency reference determining alternating voltage frequency of the power converter and the frequency droop value decreasing the frequency reference when a power flow direction is outwards from the alternating voltage terminals of the power converter,
- form an arithmetic average of the frequency droop values of the power converters,
- form a correction value based on the arithmetic average of the frequency droop values, and
- change the frequency droop value of each of the power converters by the correction value to drive the arithmetic average of the frequency droop values towards zero.

The driving the arithmetic average of the frequency droop values towards zero reduces undesired frequency drift of the AC system constituted by the power converters even if none of the power converters acts as a master and/or there is no higher-level controller for controlling the frequency references of the power converters in a centralized way.

As the power converters can be controlled in the same way with respect to each other, there can be redundancy so that in a failure situation where one of the power converters becomes inoperable the remaining power converter or converters can continue feeding an AC load but with reduced total power.

In a control system according to an advantageous and non-limiting embodiment, the above-mentioned data processing system is constituted by data processors of the power converters and the control system comprises a data transfer network configured to transfer the frequency droop value of each power converter from the data processor of the power converter under consideration to the data processor or processors of the other power converter or converters.

In this document, the term "electric power" means active power in conjunction with AC systems, i.e. not reactive power nor apparent power. The term "electric power" is used because this term is applicable in conjunction with both AC systems and direct current "DC" systems.

In accordance with the invention, there is also provided a new electric power system that comprises:
- power converters whose alternating voltage terminals are connected to each other, each of the power converters comprising a converter stage configured to form one or more alternating voltages, a driver stage configured to control the converter stage to form the one or more alternating voltages in accordance with a frequency reference expressing frequency of the one or more alternating voltages, and a line filter between the converter stage and the alternating voltage terminals, and
- a control system according to the invention and configured to determine the frequency references of the power converters.

**In** accordance with the invention, there is also provided a new power converter that comprises:
- a converter stage configured to form one or more alternating voltages,
- a driver stage configured to control the converter stage to form the one or more alternating voltages in accordance with a frequency reference expressing frequency of the one or more alternating voltages, and
- a data processor configured to form a local frequency droop value based on data indicative of electric power of the power converter and to change the frequency reference by the local frequency droop value, the local frequency droop value decreasing the frequency reference when a direction of a power flow maintained by the one or more alternating voltages is outwards from the converter stage,
wherein the data processor is configured to:
- receive one or more other frequency droop values from a data transfer network,
- transmit the local frequency droop value to the data transfer network,
- form an arithmetic average of the local frequency droop value and the received one or more other frequency droop values,
- form a correction value based on the arithmetic average, and
- change the local frequency droop value by the correction value to drive the arithmetic average towards zero.

A power converter according to an exemplifying and non-limiting embodiment further comprises a line filter connected to the converter stage. It is however also possible that the line filter is a part of an electric system to which the power converter is connectable. The word "line filter" is to be understood broadly so that e.g. primary and secondary stray inductances of a transformer may constitute a line filter.

In accordance with the invention, there is also provided a new method for controlling power converters whose alternating voltage terminals are connected to each other. A method according to the invention comprises:
- forming, for each of the power converters, a frequency droop value based on data indicative of electric power of the power converter,
- changing a frequency reference of each of the power converters by the frequency droop value of the power converter, the frequency reference determining alternating voltage frequency of the power converter and the frequency droop value decreasing the frequency reference when a power flow direction is outwards from the alternating voltage terminals of the power converter,
- forming an arithmetic average of the frequency droop values of the power converters,
- forming a correction value based on the arithmetic average of the frequency droop values, and
- changing the frequency droop value of each of the power converters by the correction value to drive the arithmetic average of the frequency droop values towards zero.

In accordance with the invention, there is also provided a new computer program for controlling power converters whose alternating voltage terminals are connected to each other. A computer program according to the invention comprises computer executable instructions for controlling a programmable data processing system to:
- form, for each of the power converters, a frequency droop value based on data indicative of electric power of the power converter,
- change a frequency reference of each of the power converters by the frequency droop value of the power converter, the frequency reference determining alternating voltage frequency of the power converter and the frequency droop value decreasing the frequency reference when a power flow direction is outwards from the alternating voltage terminals of the power converter,
- form an arithmetic average of the frequency droop values of the power converters,
- form a correction value based on the arithmetic average of the frequency droop values, and
- change the frequency droop value of each of the power converters by the correction value to drive the arithmetic average of the frequency droop values towards zero.

In accordance with the invention, there is also provided a new computer program product. The computer program product comprises a non-volatile computer readable medium, e.g. a compact disc "CD", encoded with a computer program according to the invention.

Exemplifying and non-limiting embodiments are described in accompanied dependent claims.

Exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of un-recited features.

The features recited in dependent claims are mutually freely combinable unless otherwise explicitly stated.

Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
figure 1a illustrates an electric power system that comprises a control system according to an exemplifying and non-limiting embodiment for controlling power converters of the electric power system,
figure 1b illustrates a functional block diagram of a part of the control system configured to control n^{th} one of the power converters of the electric power system illustrated in figure 1a,
figure 2 illustrates an electric power system that comprises a control system according to an exemplifying and non-limiting embodiment for controlling power converters of the electric power system, and
figure 3 shows a flowchart of a method according to an exemplifying and non-limiting embodiment for controlling power converters whose alternating voltage terminals are connected to each other.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

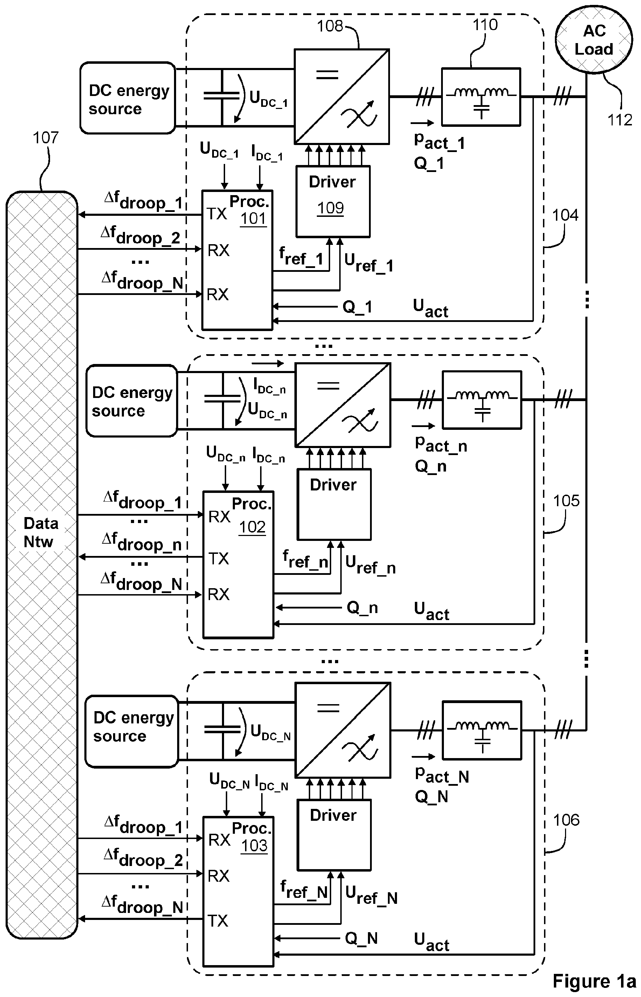

Figure 1a illustrates an electric power system according to an exemplifying and non-limiting embodiment. The electric power system comprises power converters whose alternating voltage terminals are connected to each other. In figure 1a, three of the power converters are denoted with references 104, 105, and 106. In this exemplifying case, each of the power converters is configured to transfer electric power from a direct current "DC" energy source to an alternating current "AC" load 112. Each DC energy source may comprise for example a battery system, a fuel cell system, a photovoltaic panel system, and/or a genset comprising a rectifier and a generator driven by a combustion engine, a wind turbine, a hydro turbine, or some other prime mover. It is also possible that one or more of the power converters is/are capable of transferring electric power from its/their alternating voltage terminals to the respective DC energy source for example in a case in which the DC energy source under consideration is a battery system which is charged by electric power supplied by one or more other DC energy sources of the electric power system.

Each of the power converters comprises a converter stage configured to convert direct voltage U_{DC_1}, ..., U_{DC_N} of a direct voltage link of the power converter into three-phase alternating voltage. It is however also possible that the number of phases of the AC load 112 and thereby the number of phases of the converter stages of the power converters is less than three or greater than three. The converter stage of the power converter 104 is denoted with reference 108 in figure 1a. The converter stage of each of the power converters can be e.g. an inverter bridge implemented with controllable semiconductor components such as e.g. insulated gate bipolar transistors "IGBT" or gate turn off "GTO" thyristors, and possibly with diodes that are antiparallel with the controllable semiconductor components.

In the exemplifying electric power system illustrated in figure 1a, each of the power converters comprises a line filter between the converter stage and the alternating voltage terminals of the power converter. The line filter can be for example an inductor-capacitor-inductor "LCL" filter. The line filter of the power converter 104 is denoted with reference 110.

Each of the power converters comprises a driver stage configured to control the converter stage to form the three-phase alternating voltage in accordance with a respective frequency reference f_{ref_1}, ... or, f_{ref_N} that expresses frequency of the three-phase alternating voltage and in accordance with a respective voltage reference U_{ref_1}, ... or, U_{ref_N}. The driver stage of the power converter 104 is denoted with reference 109 in figure 1a. The three-phase alternating voltage can be produced for example by forming phase voltage references and running pulse width modulation "PWM" in accordance with the phase voltage references. The PWM results in phase voltages that constitute the three-phase alternating voltage. There are also other techniques to form the three-phase alternating voltage using PWM, e.g. space-vector modulation.

The electric power system comprises a control system according to an exemplifying and non-limiting embodiment. The control system comprises a data processing system configured to determine the frequency references f_{ref_1}, ..., f_{ref_N} of the power converters. In this exemplifying case, the data processing system is constituted by data processors of the power converters. In figure 1a, the data processors of the power converters 104, 105, and 106 are denoted with references 101, 102, and 103. The data processors of the power converters are communicatively connected to each other via a data transfer network 107 that can be e.g. a field bus.

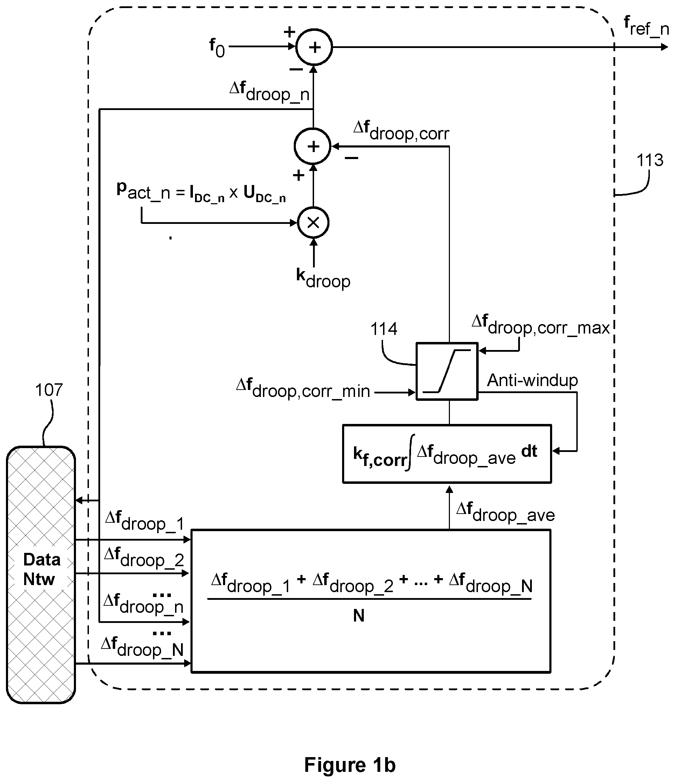

Figure 1b illustrates a functional block diagram of a part of the control system that determines the frequency reference f_{ref_n} of the power converter 105 which is the n^{th} one of the power converters of the electric power system. The functionality that is inside a block 113 can be implemented with the data processor 102. Without limiting the generality, the considerations below can be limited to the data processor 102 only because the data processors of the other power converters can be configured to implement the same functionality for determining the frequency references f_{ref_1}, ..., f_{ref_n-1}, f_{ref_n+1}, ..., f_{ref_N} for the other power converters.

The data processor 102 is configured to form a frequency droop value Δf_{droop_n} based on data indicative of actual electric power p_{act_n} of the power converter 105. The actual electric power p_{act_n} can be computed e.g. based on direct current I_{DC_n} and direct voltage U_{DC_n} supplied to the converter stage of the power converter 105 so that p_{act_n} = U_{DC_n} × I_{DC_n}. The data processor 102 is configured to change the frequency reference f_{ref_n} by the frequency droop value Δf_{droop_n} so that the frequency droop value decreases the frequency reference f_{ref_n} when a power flow direction is outwards from alternating voltage terminals of the power converter 105 i.e. the power flow direction is from the power converter 105 to the AC load 112. Correspondingly, the frequency droop value Δf_{droop_n} increases the frequency reference f_{ref_n} when the power flow direction is the opposite. The dependence of the frequency reference f_{ref_n} on the frequency droop value Δf_{droop_n} constitutes drooping feedback from the electric power p_{act_n} of the power converter 105 to the alternating voltage frequency of the power converter 105. The electric power p_{act_n} increases when the alternating voltage frequency of the power converter 105 is greater than operating frequency of the AC load 112 because this frequency difference increases a power angle between the power converter 105 and the AC load 112. In this exemplifying situation, the above-mentioned drooping feedback decreases the alternating voltage frequency of the power converter 105, which in turn reduces the electric power p_{act_n}. Correspondingly, the electric power p_{act_n} decreases when the alternating voltage frequency of the power converter is less than the operating frequency of the AC load 112 because this frequency difference decreases the above-mentioned power angle. In this exemplifying situation, the above-mentioned drooping feedback increases the alternating voltage frequency of the power converter 105, which in turn increases the electric power p_{act_n}.

The data processor 102 comprises a first data interface RX configured to receive the frequency droop values Δf_{droop_1}, ..., Δf_{droop_n-1} , Δf_{droop_n+1}, ..., Δf_{droop_N} of the other power converters via the data transfer network 107. Furthermore, the data processor 102 comprises a second data interface TX configured to transmit the frequency droop value Δf_{droop_n} to the other power converters via the data transfer network 107. The data processor 102 is configured to form an arithmetic average Δf_{droop_ave} of all the frequency droop values of the power converters, including its own frequency droop value Δf_{droop_n}. The data processor 102 is configured to form a correction value Δf_{droop,corr} based on the arithmetic average of the frequency droop values, and to change the frequency droop value Δf_{droop_n} of each of the power converters by the correction value Δf_{droop,corr} to drive the arithmetic average Δf_{droop_ave} of the frequency droop values towards zero. The driving the arithmetic average Δf_{droop_ave} towards zero reduces undesired frequency drift of the AC load 112 even if none of the power converters acts as a master and/or there is no higher-level controller for controlling the frequency references of the power converters in a centralized way.

In a control system according to an exemplifying and non-limiting embodiment, the data processor 102 is configured to determine the frequency reference f_{ref_n} according to the following formulas: ${Δf}_{droop _ ave} = {\sum }_{i = 1 … N} {Δf}_{droop _ i} / N ,$ (1) ${Δf}_{droop , corr} = {k}_{f , corr} \int \left({Δf}_{droop _ ave}\right) dt ,$ (2) ${Δf}_{droop _ n} = {k}_{droop} {p}_{act _ n} - {Δf}_{droop , corr ,} and$ (3) ${f}_{ref _ n} = {f}_{0} - {Δf}_{droop _ n} ,$ (4) where N is the number of the power converters, k_{f,corr} is a correction coefficient, k_{droop} is a drooping coefficient for changing the frequency reference f_{ref_n} in accordance with the electric power p_{act_n}, and f₀ is a base value, e.g. 50 Hz, for the frequency references of the power converters. The drooping coefficient k_{droop} can be for example in the range from 0.01 to 0.1, e.g. 0.04. The correction coefficient k_{f,corr} can be for example in the range from 0.01 to 0.1, e.g. 0.05.

In a control system according to an exemplifying and non-limiting embodiment, the data processor 102, is configured to limit the correction value Δf_{droop,corr} to be at least a predetermined lower limit Δf_{droop,corr_min} and at most a predetermined upper limit Δf_{droop,corr,max}. In figure 1b, the limitation of the correction value Δf_{droop,corr} is depicted with a limiter block 114. The data processor 102 is advantageously configured to implement an anti-windup functionality that prevents an absolute value of the time integral of the arithmetic average Δf_{droop_ave} from increasing in response to a situation in which the correction value Δf_{droop,corr} reaches the above-mentioned upper limit Δf_{droop,corr,max} or the above-mentioned lower limit Δf_{droop,corr_min}.

In the exemplifying control system illustrated in figure 1a, the data processors of the power converters are configured to determine the voltage references U_{ref_1}, ..., U_{ref_N}, too. The voltage references can be determined for example based on a given voltage setpoint, e.g. 400 V line-to-line RMS, and on a desired behavior of reactive powers Q_1, ..., Q_N supplied by the power converters to the AC load 112. The voltage references U_{ref_1}, ..., U_{ref_N} can be determined with for example a suitable method according to the prior art. The invention is not limited to any specific ways to determine the voltage references.

The implementation of each of the data processors of the power converters, e.g. the data processors 101-103, can be based on one or more analogue circuits, one or more digital processing circuits, or a combination thereof. Each digital processing circuit can be a programmable processor circuit provided with appropriate software, a dedicated hardware processor such as for example an application specific integrated circuit "ASIC", or a configurable hardware processor such as for example a field programmable gate array "FPGA". Furthermore, the data processor may comprise one or more memory circuits each of which can be for example a random-access memory "RAM" circuit.

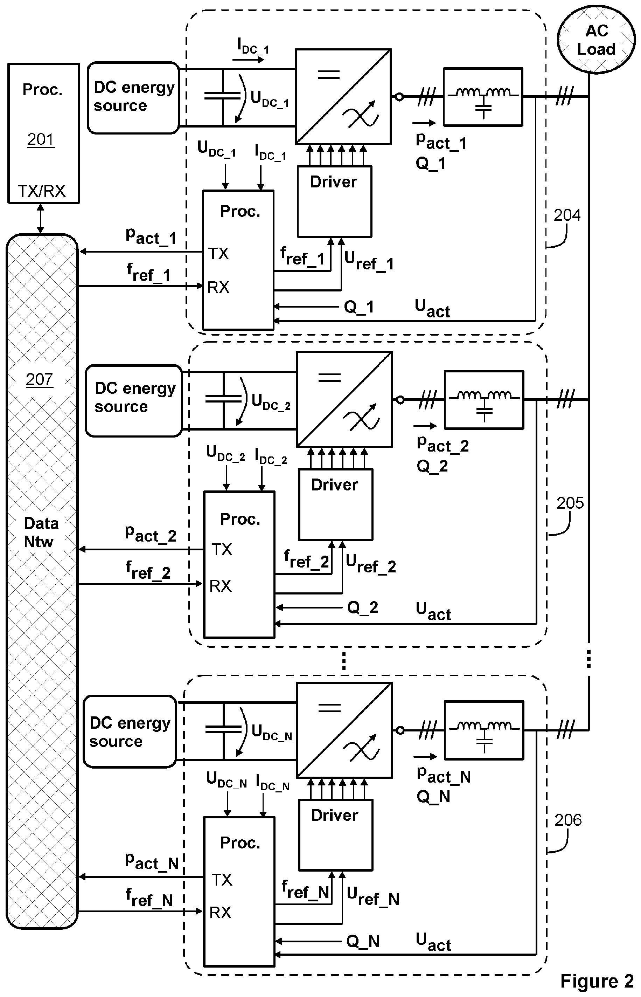

The exemplifying control system illustrated in figure 1a has a distributed architecture so that the data processing system is implemented with the data processors of the power converters, such as the data processors 101-103. Figure 2 illustrates an electric power system that comprises a control system according to another exemplifying and non-limiting embodiment. The electric power system comprises power converters whose alternating voltage terminals are connected to each other. In figure 2, three of the power converters are denoted with references 204, 205, and 206. In this exemplifying case, each of the power converters is configured to transfer electric power from a direct current "DC" energy source to an alternating current "AC" load. The control system comprises a data processing system configured to determine the frequency references f_{ref_1}, ..., f_{ref_N} of the power converters. In this exemplifying case, the data processing system has a centralized architecture so that the data processing system comprises a data processor 201 that is configured to determine the frequency references f_{ref_1}, ..., f_{ref_N} of all the power converters. Furthermore, the control system comprises a data transfer network 207 configured to transfer the frequency references f_{ref_1}, ..., f_{ref_N} from the data processor 201 to the respective power converters and to transfer data indicative of the electric powers p_{act_1}, ..., p_{act_N} from the power converters to the data processor 201. The data processor 201 can be configured to determine the frequency references f_{ref_1}, ..., f_{ref_N} for example according to the above-presented formulas 1-4 so that n = 1, ...., N.

The implementation of the data processor 201 shown in figure 2 can be based on one or more analogue circuits, one or more digital processing circuits, or a combination thereof. Each digital processing circuit can be a programmable processor circuit provided with appropriate software, a dedicated hardware processor such as for example an application specific integrated circuit "ASIC", or a configurable hardware processor such as for example a field programmable gate array "FPGA". Furthermore, the data processor 201 may comprise one or more memory circuits each of which can be for example a random-access memory "RAM" circuit.

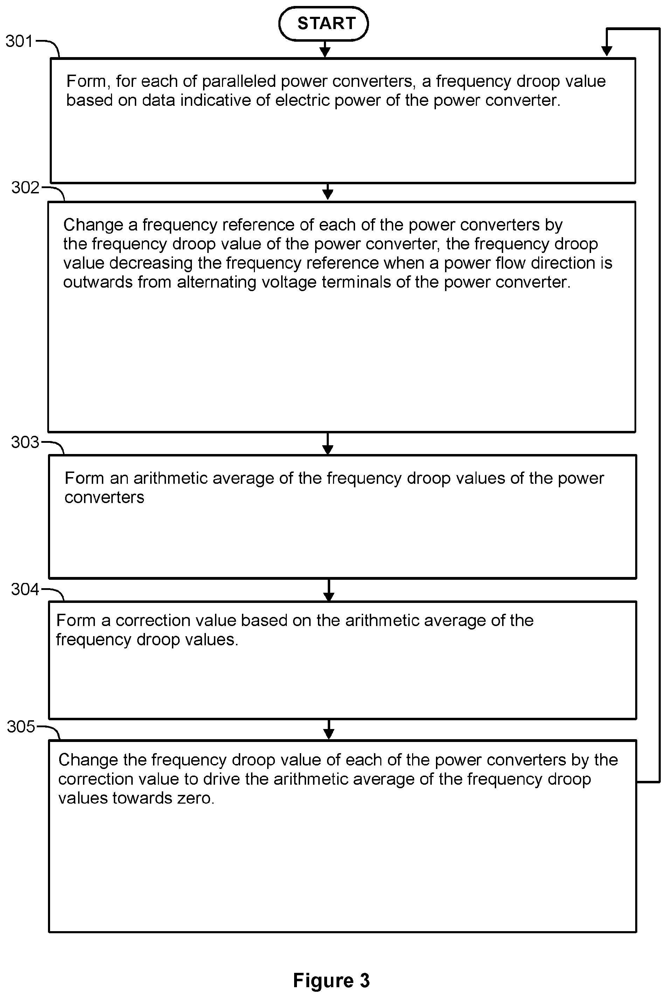

Figure 3 shows flowchart of a method according to an exemplifying and non-limiting embodiment for controlling power converters whose alternating voltage terminals are connected to each other. The method comprises the following actions:
- action 301: forming, for each of the power converters, a frequency droop value based on data indicative of electric power of the power converter,
- action 302: changing a frequency reference of each of the power converters by the frequency droop value of the power converter, the frequency reference determining alternating voltage frequency of the power converter and the frequency droop value decreasing the frequency reference when a power flow direction is outwards from the alternating voltage terminals of the power converter,
- action 303: forming an arithmetic average of the frequency droop values of the power converters,
- action 304: forming a correction value based on the arithmetic average of the frequency droop values, and
- action 305: changing the frequency droop value of each of the power converters by the correction value to drive the arithmetic average of the frequency droop values towards zero.

In a method according to an exemplifying and non-limiting embodiment, the frequency reference of each of the power converters is formed according to the following formulas so that n = 1, ..., the number N of the power converters: ${f}_{droop _ ave} = {\sum }_{i = 1 … N} {Δf}_{droop _ i} / N ,$ ${Δf}_{droop , corr} = {k}_{f , corr} \int \left({Δf}_{droop _ ave}\right) dt$ $Δ {f}_{droop_n} = {k}_{droop} {p}_{act_n} - {Δf}_{droop , corr ,}$ and ${f}_{ref_n} = {f}_{0} - {Δf}_{droop_n ,}$ where Δf_{droop_ave} is the arithmetic average of the frequency droop values of the power converters, Δf_{droop_n} is the frequency droop value of n^{th} one of the power converters, and Δf_{droop,corr} is the correction value, k_{f,corr} is a correction coefficient, p_{act_n} is the electric power of the n^{th} one of the power converters, k_{droop} is a drooping coefficient for changing the frequency reference in accordance with the electric power, f_{ref_n} is the frequency reference of the n^{th} one of the power converters, and f₀ is a base value of the frequency references of the power converters.

A method according to an exemplifying and non-limiting embodiment comprises limiting the correction value Δf_{droop,corr} to be at least a predetermined lower limit Δf_{droop,corr_min} of the correction value and at most a predetermined upper limit Δf_{droop,corr,max} of the correction value.

A method according to an exemplifying and non-limiting embodiment comprises preventing an absolute value of the time integral of the arithmetic average Δf_{droop_ave} from increasing in response to a situation in which the correction value Δf_{droop,corr} reaches the above-mentioned upper limit Δf_{droop,corr,max} or the above-mentioned lower limit Δf_{droop,corr_min}.

A computer program according to an exemplifying and non-limiting embodiment comprises computer executable instructions for controlling a programmable data processing system to carry out actions related to a method according to any of the above-described exemplifying and non-limiting embodiments.

A computer program according to an exemplifying and non-limiting embodiment comprises software modules for controlling power converters whose alternating voltage terminals are connected to each other. The software modules comprise computer executable instructions for controlling a programmable data processing system to:
- form, for each of the power converters, a frequency droop value Δf_{droop_n} based on data indicative of electric power p_{act,n} of the power converter,
- change a frequency reference f_{ref_n} of each of the power converters by the frequency droop value of the power converter, the frequency reference determining alternating voltage frequency of the power converter and the frequency droop value decreasing the frequency reference when a power flow direction is outwards from the alternating voltage terminals of the power converter,
- form an arithmetic average Δf_{droop_ave} of the frequency droop values of the power converters,
- form a correction value Δf_{droop,corr} based on the arithmetic average of the frequency droop values, and
- change the frequency droop value Δf_{droop_n} of each of the power converters by the correction value to drive the arithmetic average of the frequency droop values towards zero.

The software modules can be for example subroutines or functions implemented with programming tools suitable for the programmable data processing system.

A computer program product according to an exemplifying and non-limiting embodiment comprises a computer readable medium, e.g. a compact disc "CD", encoded with a computer program according to an exemplifying embodiment of invention.

A signal according to an exemplifying and non-limiting embodiment is encoded to carry information defining a computer program according to an exemplifying embodiment of invention.

The specific examples provided in the description given above should not be construed as limiting the scope and/or the applicability of the appended claims. Lists and groups of examples provided in the description given above are not exhaustive unless otherwise explicitly stated.

## Claims

1. A control system for controlling power converters (104 106, 204-206) whose alternating voltage terminals are connected to each other, the control system comprising a data processing system (101-103, 201) configured to:
- form, for each of the power converters, a frequency droop value (Δf_{droop_n}) based on data (U_{DC_n}, I_{DC_N}) indicative of electric power (p_{act,n}) of the power converter, and
- change a frequency reference (f_{ref_n}) of each of the power converters by the frequency droop value of the power converter, the frequency reference determining alternating voltage frequency of the power converter and the frequency droop value decreasing the frequency reference when a power flow direction is outwards from the alternating voltage terminals of the power converter,
**characterized in that** the data processing system is configured to:
- form an arithmetic average (Δf_{droop_ave}) of the frequency droop values of the power converters,
- form a correction value (Δf_{droop,corr}) based on the arithmetic average of the frequency droop values, and
- change the frequency droop value (Δf_{droop_n}) of each of the power converters by the correction value to drive the arithmetic average of the frequency droop values towards zero.

2. A control system according to claim 1, wherein the data processing system is configured to form the frequency reference of each of the power converters according to the following formulas: ${f}_{droop _ ave} = {\sum }_{i = 1 … N} {Δf}_{droop _ i} / N ,$ ${Δf}_{droop , corr} = {k}_{f , corr} \int \left({Δf}_{droop _ ave}\right) dt$ ${Δf}_{droop_n} = {k}_{droop} {p}_{act_n} - {Δf}_{droop , corr ,}$ and ${f}_{ref_n} = {f}_{0} - {Δf}_{droop_n ,}$ where Δf_{droop_ave} is the arithmetic average of the frequency droop values of the power converters, Δf_{droop_n} is the frequency droop value of n^{th} one of the power converters, N is the number of the power converters, and Δf_{droop,corr} is the correction value, k_{f,corr} is a correction coefficient, p_{act_n} is the electric power of the n^{th} one of the power converters, k_{droop} is a drooping coefficient for changing the frequency reference in accordance with the electric power, f_{ref_n} is the frequency reference of the n^{th} one of the power converters, and f₀ is a base value of the frequency references of the power converters.

3. A control system according to claim 1 or 2, wherein the data processing system comprises data processors (101-103) each being configured to control one of the power converters and each of the power converters being controlled by one of the data processors, and the control system comprises a data transfer network (107) configured to transfer the frequency droop value of each of the power converters from the data processor controlling the power converter to other one or ones of the data processors controlling other one or ones of the power converters.

4. A control system according to claim 1 or 2, wherein the data processing system comprises a data processor (201) configured to control the power converters, and the control system comprises a data transfer network (207) configured to transfer the frequency references from the data processor to the power converters and to transfer the data indicative of the electric powers from the power converters to the data processor.

5. A control system according to any one of claims 1-4, wherein the data processing system is configured to limit the correction value (Δf_{droop,corr}) to be at least a predetermined lower limit of the correction value and at most a predetermined upper limit of the correction value.

6. An electric power system comprising:
- power converters (104-106, 204-206) whose alternating voltage terminals are connected to each other, each of the power converters comprising a converter stage (108) configured to form one or more alternating voltages, a driver stage (109) configured to control the converter stage to form the one or more alternating voltages in accordance with a frequency reference (f_{ref_n}) expressing frequency of the one or more alternating voltages, and a line filter (110) between the converter stage and the alternating voltage terminals, and
- a control system according to any one of claims 1-5 and configured to determine the frequency references of the power converters.

7. A power converter (104) comprising:
- a converter stage (108) configured to form one or more alternating voltages,
- a driver stage (109) configured to control the converter stage to form the one or more alternating voltages in accordance with a frequency reference (f_{ref_1}) expressing frequency of the one or more alternating voltages, and
- a data processor (101) configured to form a local frequency droop value (Δf_{droop_1}) based on data (U_{DC_1}, I_{DC_1}) indicative of electric power (p_{act,1}) of the power converter and to change the frequency reference (f_{ref_1}) by the local frequency droop value, the local frequency droop value decreasing the frequency reference when a direction of a power flow maintained by the one or more alternating voltages is outwards from the converter stage,
**characterized in that** the data processor is configured to:
- receive one or more other frequency droop values (Δf_{droop_2}, ..., Δf_{droop_N}) from a data transfer network,
- transmit the local frequency droop value (Δf_{droop_1}) to the data transfer network,
- form an arithmetic average (Δf_{droop_ave}) of the local frequency droop value and the received one or more other frequency droop values,
- form a correction value (Δf_{droop,corr}) based on the arithmetic average, and
- change the local frequency droop value (Δf_{droop_1}) by the correction value to drive the arithmetic average towards zero.

8. A method for controlling power converters whose alternating voltage terminals are connected to each other, the method comprising:
- forming (301), for each of the power converters, a frequency droop value (Δf_{droop_n}) based on data (U_{DC_n}, I_{DC_N}) indicative of electric power (p_{act,n}) of the power converter, and
- changing (302) a frequency reference (f_{ref_n}) of each of the power converters by the frequency droop value of the power converter, the frequency reference determining alternating voltage frequency of the power converter and the frequency droop value decreasing the frequency reference when a power flow direction is outwards from the alternating voltage terminals of the power converter,
**characterized in that** the method further comprises:
- forming (303) an arithmetic average (Δf_{droop_ave}) of the frequency droop values of the power converters,
- forming (304) a correction value (Δf_{droop,corr}) based on the arithmetic average of the frequency droop values, and
- changing (305) the frequency droop value (Δf_{droop_n}) of each of the power converters by the correction value to drive the arithmetic average of the frequency droop values towards zero.

9. A method according to claim 8, wherein the frequency reference of each of the power converters is formed according to the following formulas: ${Δf}_{droop _ ave} = {\sum }_{i = 1 … N} {Δf}_{droop _ i} / N ,$ ${Δf}_{droop , corr} = {k}_{f , corr} \int \left({Δf}_{droop _ ave}\right) dt$ ${Δf}_{droop_n} = {k}_{droop} {p}_{act_n} - {Δf}_{droop , corr ,}$ and ${f}_{ref_n} = {f}_{0} - {Δf}_{droop_n ,}$ where Δf_{droop_ave} is the arithmetic average of the frequency droop values of the power converters, Δf_{droop_n} is the frequency droop value of n^{th} one of the power converters, N is the number of the power converters, and Δf_{droop,corr} is the correction value, k_{f,corr} is a correction coefficient, p_{act_n} is the electric power of the n^{th} one of the power converters, k_{droop} is a drooping coefficient for changing the frequency reference in accordance with the electric power, f_{ref_n} is the frequency reference of the n^{th} one of the power converters, and f₀ is a base value of the frequency references of the power converters.

10. A computer program for controlling power converters whose alternating voltage terminals are connected to each other, the computer program comprising computer executable instructions for controlling a programmable data processing system to:
- form, for each of the power converters, a frequency droop value (Δf_{droop_n}) based on data (U_{DC_n}, I_{DC_N}) indicative of electric power (p_{act,n}) of the power converter, and
- change a frequency reference (f_{ref_n}) of each of the power converters by the frequency droop value of the power converter, the frequency reference determining alternating voltage frequency of the power converter and the frequency droop value decreasing the frequency reference when a power flow direction is outwards from the alternating voltage terminals of the power converter,
**characterized in that** the computer program comprises computer executable instructions for controlling the programmable data processing system to:
- form an arithmetic average (Δf_{droop_ave}) of the frequency droop values of the power converters,
- form a correction value (Δf_{droop,corr}) based on the arithmetic average of the frequency droop values, and
- change the frequency droop value (Δf_{droop_n}) of each of the power converters by the correction value to drive the arithmetic average of the frequency droop values towards zero.

11. A non-volatile computer readable medium encoded with a computer program according to claim 10.

## Patentansprüche

1. Steuersystem zur Steuerung von Stromrichtern (104 - 106, 204 - 206), deren Wechselspannungsanschlüsse miteinander verbunden sind, wobei das Steuersystem ein Datenverarbeitungssystem (101 - 103, 201) umfasst, das für Folgendes ausgestaltet ist:
- Ausbilden - für jeden der Stromrichter - eines Frequenzstatikwertes (Δf_{droop_n}) basierend auf Daten (U_{DC_n}, I_{DC_n}), die eine elektrische Leistung (p_{act,n}) des Stromrichters angeben, und
- Ändern einer Frequenzreferenz (f_{ref_n}) jedes der Stromrichter um den Frequenzstatikwert des Stromrichters, wobei die Frequenzreferenz die Wechselspannungsfrequenz des Stromrichters bestimmt und der Frequenzstatikwert die Frequenzreferenz vermindert, wenn eine Stromflussrichtung von den Wechselspannungsanschlüssen des Stromrichters nach außen verläuft,
**dadurch gekennzeichnet, dass** das Datenverarbeitungssystem für Folgendes ausgestaltet ist:
- Ausbilden eines arithmetischen Mittels (Δf_{droop_ave}) der Frequenzstatikwerte der Stromrichter,
- Ausbilden eines Korrekturwertes (Δf_{droop,corr}) basierend auf dem arithmetischen Mittel der Frequenzstatikwerte und
- Ändern des Frequenzstatikwertes (Δf_{droop_n}) jedes der Stromrichter um den Korrekturwert, um das arithmetische Mittel der Frequenzstatikwerte in Richtung null zu drücken.

2. Steuersystem nach Anspruch 1, wobei das Datenverarbeitungssystem dazu ausgestaltet ist, die Frequenzreferenz jedes der Stromrichter gemäß den folgenden Formeln auszubilden: ${f}_{droop_ave} = {\sum }_{i = 1 … N} {Δf}_{droop_i} / N ,$ ${Δf}_{droop , corr} = {k}_{f , corr} \int \left({Δf}_{droop_ave}\right) dt ,$ ${Δf}_{droop_n} = {k}_{droop} {p}_{act_n} - {Δf}_{droop , corr} ,$ und ${f}_{ref_n} = {f}_{0} - {Δf}_{droop_n} ,$ wobei Δf_{droop_ave} das arithmetische Mittel der Frequenzstatikwerte der Stromrichter ist, Δf_{droop_n} der Frequenzstatikwert des n-ten der Stromrichter ist, N die Anzahl der Stromrichter ist und Δf_{droop,corr} der Korrekturwert ist, k_{f,corr} ein Korrekturkoeffizient ist, p_{act_n} die elektrische Leistung des n-ten der Stromrichter ist, k_{droop} ein Statikkoeffizient zum Ändern der Frequenzreferenz gemäß der elektrischen Leistung ist, f_{ref_n} die Frequenzreferenz des n-ten der Stromrichter ist und f₀ ein Basiswert der Frequenzreferenzen der Stromrichter ist.

3. Steuersystem nach Anspruch 1 oder 2, wobei das Datenverarbeitungssystem Datenprozessoren (101 - 103) umfasst, die jeweils dazu ausgestaltet sind, einen der Stromrichter zu steuern, und wobei jeder der Stromrichter durch einen der Datenprozessoren gesteuert wird, und das Steuersystem ein Datenübertragungsnetz (107) umfasst, das dazu ausgestaltet ist, den Frequenzstatikwert jedes der Stromrichter von dem Datenprozessor, der den Stromrichter steuert, zu einem anderen oder anderen der Datenprozessoren, die einen anderen oder andere der Stromrichter steuern, zu übertragen.

4. Steuersystem nach Anspruch 1 oder 2, wobei das Datenverarbeitungssystem einen Datenprozessor (201) umfasst, der dazu ausgestaltet ist, die Stromrichter zu steuern, und das Steuersystem ein Datenübertragungsnetz (207) umfasst, das dazu ausgestaltet ist, die Frequenzreferenzen von dem Datenprozessor zu den Stromrichtern zu übertragen und die Daten, welche die elektrischen Leistungen angeben, von den Stromrichtern zu dem Datenprozessor zu übertragen.

5. Steuersystem nach einem der Ansprüche 1 - 4, wobei das Datenverarbeitungssystem dazu ausgestaltet ist, den Korrekturwert (Δf_{droop,corr}) zu begrenzen, sodass dieser wenigstens einem vorgegebenen unteren Grenzwert des Korrekturwertes und höchstens einem vorgegebenen oberen Grenzwert des Korrekturwertes entspricht.

6. Stromversorgungssystem, umfassend:
- Stromrichter (104 - 106, 204 - 206), deren Wechselspannungsanschlüsse miteinander verbunden sind, wobei jeder der Stromrichter eine Umrichterstufe (108), die dazu ausgestaltet ist, eine oder mehrere Wechselspannungen auszubilden, eine Treiberstufe (109), die dazu ausgestaltet ist, die Umrichterstufe dazu zu steuern, die eine oder mehreren Wechselspannungen gemäß einer Frequenzreferenz (f_{ref_n}), welche die Frequenz der einen oder mehreren Wechselspannungen ausdrückt, auszubilden, und einen Leitungsfilter (110) zwischen der Umrichterstufe und den Wechselspannungsanschlüssen umfasst, und
- ein Steuersystem nach einem der Ansprüche 1 - 5 und dazu ausgestaltet, die Frequenzreferenzen der Stromrichter zu bestimmen.

7. Stromrichter (104), umfassend:
- eine Umrichterstufe (108), die dazu ausgestaltet ist, eine oder mehrere Wechselspannungen auszubilden,
- eine Treiberstufe (109), die dazu ausgestaltet ist, die Umrichterstufe dazu zu steuern, die eine oder mehreren Wechselspannungen gemäß einer Frequenzreferenz (f_{ref_1}), welche die Frequenz der einen oder mehreren Wechselspannungen ausdrückt, auszubilden, und
- einen Datenprozessor (101), der dazu ausgestaltet ist, einen lokalen Frequenzstatikwert (Δf_{droop_1}) basierend auf Daten (U_{DC_1}, I_{DC_1}), die eine elektrische Leistung (p_{act,1}) des Stromrichters angeben, auszubilden und die Frequenzreferenz (f_{ref_1}) um den lokalen Frequenzstatikwert zu ändern, wobei der lokale Frequenzstatikwert die Frequenzreferenz vermindert, wenn eine Richtung eines Stromflusses, der durch die eine oder mehreren Wechselspannungen aufrechterhalten wird, von der Umrichterstufe nach außen verläuft,
**dadurch gekennzeichnet, dass** der Datenprozessor für Folgendes ausgestaltet ist:
- Empfangen eines oder mehrerer anderer Frequenzstatikwerte (Δf_{droop_2}, ..., Δf_{droop_N}) von einem Datenübertragungsnetz,
- Übertragen des lokalen Frequenzstatikwertes (Δf_{droop_1}) an das Datenübertragungsnetz,
- Ausbilden eines arithmetischen Mittels (Δf_{droop_ave}) des lokalen Frequenzstatikwertes und des/r empfangenen einen oder mehreren anderen Frequenzstatikwerte,
- Ausbilden eines Korrekturwertes (Δf_{droop,corr}) basierend auf dem arithmetischen Mittel und
- Ändern des lokalen Frequenzstatikwertes (Δf_{droop_1}) um den Korrekturwert, um das arithmetische Mittel in Richtung null zu drücken.

8. Verfahren zur Steuerung von Stromrichtern, deren Wechselspannungsanschlüsse miteinander verbunden sind, wobei das Verfahren Folgendes umfasst:
- Ausbilden (301) - für jeden der Stromrichter - eines Frequenzstatikwertes (Δf_{droop_n}) basierend auf Daten (U_{DC_n}, I_{DC_n}), die eine elektrische Leistung (p_{act,n}) des Stromrichters angeben, und
- Ändern (302) einer Frequenzreferenz (f_{ref_n}) jedes der Stromrichter um den Frequenzstatikwert des Stromrichters, wobei die Frequenzreferenz die Wechselspannungsfrequenz des Stromrichters bestimmt und der Frequenzstatikwert die Frequenzreferenz vermindert, wenn eine Stromflussrichtung von den Wechselspannungsanschlüssen des Stromrichters nach außen verläuft,
**dadurch gekennzeichnet, dass** das Verfahren ferner Folgendes umfasst:
- Ausbilden (303) eines arithmetischen Mittels (Δf_{droop_ave}) der Frequenzstatikwerte der Stromrichter,
- Ausbilden (304) eines Korrekturwertes (Δf_{droop,corr}) basierend auf dem arithmetischen Mittel der Frequenzstatikwerte und
- Ändern (305) des Frequenzstatikwertes (Δf_{droop_n}) jedes der Stromrichter um den Korrekturwert, um das arithmetische Mittel der Frequenzstatikwerte in Richtung null zu drücken.

9. Verfahren nach Anspruch 8, wobei die Frequenzreferenz jedes der Stromrichter gemäß den folgenden Formeln ausgebildet wird: ${f}_{droop_ave} = {\sum }_{i = 1 … N} {Δf}_{droop_i} / N ,$ ${Δf}_{droop , corr} = {k}_{f , corr} \int \left({Δf}_{droop_ave}\right) dt ,$ ${Δf}_{droop_n} = {k}_{droop} {p}_{act_n} - {Δf}_{droop , corr}$ und ${f}_{ref_n} = {f}_{0} - {Δf}_{droop_n} ,$ wobei Δf_{droop_ave} das arithmetische Mittel der Frequenzstatikwerte der Stromrichter ist, Δf_{droop_n} der Frequenzstatikwert des n-ten der Stromrichter ist, N die Anzahl der Stromrichter ist und Δf_{droop,corr} der Korrekturwert ist, k_{f,corr} ein Korrekturkoeffizient ist, p_{act_n} die elektrische Leistung des n-ten der Stromrichter ist, k_{droop} ein Statikkoeffizient zum Ändern der Frequenzreferenz gemäß der elektrischen Leistung ist, f_{ref_n} die Frequenzreferenz des n-ten der Stromrichter ist und f₀ ein Basiswert der Frequenzreferenzen der Stromrichter ist.

10. Computerprogramm zur Steuerung von Stromrichtern, deren Wechselspannungsanschlüsse miteinander verbunden sind, wobei das Computerprogramm computerausführbare Anweisungen zum Steuern eines programmierbaren Datenverarbeitungssystems für Folgendes umfasst:
- Ausbilden - für jeden der Stromrichter - eines Frequenzstatikwertes (Δf_{droop_n}) basierend auf Daten (U_{DC_n}, I_{DC_n}), die eine elektrische Leistung (p_{act,n}) des Stromrichters angeben, und
- Ändern einer Frequenzreferenz (f_{ref_n}) jedes der Stromrichter um den Frequenzstatikwert des Stromrichters, wobei die Frequenzreferenz die Wechselspannungsfrequenz des Stromrichters bestimmt und der Frequenzstatikwert die Frequenzreferenz vermindert, wenn eine Stromflussrichtung von den Wechselspannungsanschlüssen des Stromrichters nach außen verläuft,
**dadurch gekennzeichnet, dass** das Computerprogramm computerausführbare Anweisungen zum Steuern des programmierbaren Datenverarbeitungssystems für Folgendes umfasst:
- Ausbilden eines arithmetischen Mittels (Δf_{droop_ave}) der Frequenzstatikwerte der Stromrichter,
- Ausbilden eines Korrekturwertes (Δf_{droop,corr}) basierend auf dem arithmetischen Mittel der Frequenzstatikwerte und
- Ändern des Frequenzstatikwertes (Δf_{droop_n}) jedes der Stromrichter um den Korrekturwert, um das arithmetische Mittel der Frequenzstatikwerte in Richtung null zu drücken.

11. Nichtflüchtiges computerlesbares Medium, das mit einem Computerprogramm nach Anspruch 10 codiert ist.

## Revendications

1. Système de commande pour commander des convertisseurs de puissance (104-106, 204-206) dont les bornes de tension alternative sont connectées entre elles, système de commande comprenant un système de traitement de données (101-103, 201) configuré pour :
- former, pour chacun des convertisseurs de puissance, une valeur de statisme de fréquence (Δf_{droop_n}) basée sur des données (U_{DC_n}, I_{DC_n}) relatives à la puissance électrique (p_{act,n}) du convertisseur de puissance, et
- modifier une référence de fréquence (f_{ref_n}) de chacun des convertisseurs de puissance en fonction de la valeur de statisme de fréquence du convertisseur de puissance, la référence de fréquence déterminant la fréquence de la tension alternative du convertisseur de puissance et la valeur de statisme de fréquence diminuant la référence de fréquence lorsqu'un sens du flux de puissance est dirigé vers l'extérieur à partir des bornes de tension alternative du convertisseur de puissance,
**caractérisé en ce que** le système de traitement de données est configuré pour :
- former une moyenne arithmétique (Δf_{droop_ave}) des valeurs de statisme de fréquence des convertisseurs de puissance,
- former une valeur de correction (Δf_{droop,corr}) basée sur la moyenne arithmétique des valeurs de statisme de fréquence, et
- modifier la valeur de statisme de fréquence (Δf_{droop_n}) de chacun des convertisseurs de puissance en fonction de la valeur de correction pour faire tendre la moyenne arithmétique des valeurs de statisme de fréquence vers zéro.

2. Système de commande selon la revendication 1, dans lequel le système de traitement de données est configuré pour former la référence de fréquence de chacun des convertisseurs de puissance selon les formules suivantes : ${f}_{droop_ave} = {\sum }_{i = 1 … N} {Δf}_{droop_i} / N ,$ ${Δf}_{droop , corr} = {k}_{f , corr} \int \left({Δf}_{droop_ave}\right) dt$ ${Δf}_{droop_n} = {k}_{droop} {p}_{act , n} - {Δf}_{droop , corr} ,$ et ${f}_{ref_n} = {f}_{0} - {Δf}_{droop_n} ,$ dans lesquelles Δf_{droop_ave} est la moyenne arithmétique des valeurs de statisme de fréquence des convertisseurs de puissance, Δf_{droop_n} est la valeur de statisme de fréquence du n-ième convertisseur de puissance, N est le nombre de convertisseurs de puissance, et Δf_{droop,corr} est la valeur de correction, k_{f,corr} est un coefficient de correction, p_{act,n} est la puissance électrique du n-ième convertisseur de puissance, k_{droop} est un coefficient de chute pour modifier la référence de fréquence en fonction de la puissance électrique, f_{ref_n} est la référence de fréquence du n-ième convertisseur de puissance, et f₀ est une valeur de base des références de fréquence des convertisseurs de puissance.

3. Système de commande selon la revendication 1 ou 2, dans lequel le système de traitement de données comprend des processeurs de données (101-103), chacun étant configuré pour commander l'un des convertisseurs de puissance et chacun des convertisseurs de puissance étant actionné par l'un des processeurs de données, et le système de commande comprend un réseau de transfert de données (107) configuré pour transférer la valeur de statisme de fréquence de chacun des convertisseurs de puissance du processeur de données actionnant le convertisseur de puissance à un ou plusieurs autres des processeurs de données actionnant un ou plusieurs autres des convertisseurs de puissance.

4. Système de commande selon la revendication 1 ou 2, dans lequel le système de traitement de données comprend un processeur de données (201) configuré pour commander les convertisseurs de puissance, et le système de commande comprend un réseau de transfert de données (207) configuré pour transférer les références de fréquence du processeur de données aux convertisseurs de puissance et pour transférer les données relatives aux puissances électriques des convertisseurs de puissance au processeur de données.

5. Système de commande selon quelconque l'une des revendications 1-4, dans lequel le système de traitement de données est configuré pour limiter la valeur de correction (Δf_{droop,corr}) pour qu'elle soit au minimum une limite inférieure prédéterminée de la valeur de correction et au maximum une limite supérieure prédéterminée de la valeur de correction.

6. Système d'énergie électrique comprenant :
- des convertisseurs de puissance (104-106, 204-206) dont les bornes de tension alternative sont connectées entre elles, chacun des convertisseurs de puissance comprenant un étage de changement de fréquence (108) configuré pour former une ou plusieurs tensions alternatives, un étage excitateur (109) configuré pour commander l'étage de changement de fréquence pour former l'une ou les plusieurs tensions alternatives conformément à une référence de fréquence (f_{ref_n}) exprimant la fréquence de l'une ou des plusieurs tensions alternatives, et un filtre de ligne (110) entre l'étage de changement de fréquence et les bornes de tension alternative, et
- un système de commande selon l'une des revendications 1-5 et configuré pour déterminer les références de fréquence des convertisseurs de puissance.

7. Convertisseur de puissance (104) comprenant :
- un étage de changement de fréquence (108) configuré pour former une ou plusieurs tensions alternatives,
- un étage excitateur (109) configuré pour commander l'étage de changement de fréquence pour former l'une ou les plusieurs tensions alternatives conformément à une référence de fréquence (f_{ref_1}) exprimant la fréquence de l'une ou des plusieurs tensions alternatives, et
- un processeur de données (101) configuré pour former une valeur de statisme de fréquence locale (Δf_{droop_1}) basée sur des données (U_{DC_1}, I_{DC_1}) relatives à la puissance électrique (p_{act,1}) du convertisseur de puissance et pour modifier la référence de fréquence (f_{ref_1}) en fonction de la valeur de statisme de fréquence locale, la valeur de statisme de fréquence locale diminuant la référence de fréquence lorsqu'un sens d'un flux de puissance maintenu par l'une ou les plusieurs tensions alternatives est dirigé vers l'extérieur à partir de l'étage de changement de fréquence,
**caractérisé en ce que** le processeur de données est configuré pour :
- recevoir une ou plusieurs autres valeurs de statisme de fréquence (Δf_{droop_2}, ..., Δf_{droop_N}) depuis un réseau de transfert de données,
- transmettre la valeur de statisme de fréquence locale (Δf_{droop_1}) au réseau de transfert de données,
- former une moyenne arithmétique (Δf_{droop_ave}) de la valeur de statisme de fréquence locale et de l'une ou des plusieurs autres valeurs de statisme de fréquence reçues,
- former une valeur de correction (Δf_{droop,corr}) basée sur la moyenne arithmétique, et
- modifier la valeur de statisme de fréquence locale (Δf_{droop_1}) en fonction de la valeur de correction pour faire tendre la moyenne arithmétique vers zéro.

8. Procédé pour commander des convertisseurs de puissance dont les bornes de tension alternative sont connectées entre elles, procédé comprenant :
- formation (301), pour chacun des convertisseurs de puissance, d'une valeur de statisme de fréquence (Δf_{droop_n}) basée sur des données (U_{DC_n}, I_{DC_n}) relatives à la puissance électrique (p_{act,n}) du convertisseur de puissance, et
- modification (302) d'une référence de fréquence (f_{ref_n}) de chacun des convertisseurs de puissance en fonction de la valeur de statisme de fréquence du convertisseur de puissance, la référence de fréquence déterminant la fréquence de la tension alternative du convertisseur de puissance et la valeur de statisme de fréquence diminuant la référence de fréquence lorsqu'un sens du flux de puissance est dirigé vers l'extérieur à partir des bornes de tension alternative du convertisseur de puissance,
**caractérisé en ce que** le procédé comprend en outre :
- formation (303) d'une moyenne arithmétique (Δf_{droop_ave}) des valeurs de statisme de fréquence des convertisseurs de puissance,
- formation (304) d'une valeur de correction (Δf_{droop,corr}) basée sur la moyenne arithmétique des valeurs de statisme de fréquence, et
- modification (305) de la valeur de statisme de fréquence (Δf_{droop_n}) de chacun des convertisseurs de puissance en fonction de la valeur de correction pour faire tendre la moyenne arithmétique des valeurs de statisme de fréquence vers zéro.

9. Procédé selon la revendication 8, dans lequel la référence de fréquence de chacun des convertisseurs de puissance est formée en fonction des formules suivantes : ${f}_{droop_ave} = {\sum }_{i = 1 … N} {Δf}_{droop_i} / N ,$ ${Δf}_{droop , corr} = {k}_{f , corr} \int \left({Δf}_{droop_ave}\right) dt$ ${Δf}_{droop_n} = {k}_{droop} {p}_{act , n} - {Δf}_{droop , corr} ,$ et ${f}_{ref_n} = {f}_{0} - {Δf}_{droop_n} ,$ dans lesquelles Δf_{droop_ave} est la moyenne arithmétique des valeurs de statisme de fréquence des convertisseurs de puissance, Δf_{droop_n} est la valeur de statisme de fréquence du n-ième convertisseur de puissance, N est le nombre de convertisseurs de puissance, et Δf_{droop,corr} est la valeur de correction, k_{f,corr} est un coefficient de correction, p_{act,n} est la puissance électrique du n-ième convertisseur de puissance, k_{droop} est un coefficient de chute pour modifier la référence de fréquence en fonction de la puissance électrique, f_{ref_n} est la référence de fréquence du n-ième convertisseur de puissance, et f₀ est une valeur de base des références de fréquence des convertisseurs de puissance.

10. Programme informatique pour commander des convertisseurs de puissance dont les bornes de tension alternative sont connectées entre elles, le programme informatique comprenant des instructions exécutables par ordinateur pour commander à un système de traitement de données programmable de :
- former, pour chacun des convertisseurs de puissance, une valeur de statisme de fréquence (Δf_{droop_n}) basée sur des données (U_{DC_n}, I_{DC_n}) relatives à la puissance électrique (p_{act,n}) du convertisseur de puissance, et
- modifier une référence de fréquence (f_{ref_n}) de chacun des convertisseurs de puissance en fonction de la valeur de statisme de fréquence du convertisseur de puissance, la référence de fréquence déterminant la fréquence de la tension alternative du convertisseur de puissance et la valeur de statisme de fréquence diminuant la référence de fréquence lorsqu'un sens du flux de puissance est dirigé vers l'extérieur à partir des bornes de tension alternative du convertisseur de puissance,
**caractérisé en ce que** le programme informatique comprend des instructions exécutables par ordinateur pour commander au système de traitement de données programmable de :
- former une moyenne arithmétique (Δf_{droop_ave}) des valeurs de statisme de fréquence des convertisseurs de puissance,
- former une valeur de correction (Δf_{droop,corr}) basée sur la moyenne arithmétique des valeurs de statisme de fréquence, et
- modifier la valeur de statisme de fréquence (Δf_{droop_n}) de chacun des convertisseurs de puissance en fonction de la valeur de correction pour faire tendre la moyenne arithmétique des valeurs de statisme de fréquence vers zéro.

11. Support non volatile lisible par ordinateur sur lequel est encodé un programme informatique selon la revendication 10.
